# FASCICULE DE BREVET EUROPEEN

(11) **EP 0 969 239 B1**
(45) Date de publication et mention de la délivrance du brevet: **17.11.2004**
(21) Numéro de dépôt: 99420143.2
(22) Date de dépôt: 25.06.1999
(51) Int. Cl.: F16L 29/04

(54) **Coupe-circuit pour installation de manutention de fluide sous pression**
Abschaltgerät für unter Druck stehende Flüssigkeitshandhabungs-Anlage
Disconnection device for pressure fluid handling installation

(30) Priorité: 30.06.1998 FR 9808476
(43) Date de publication de la demande: 05.01.2000
(73) Titulaire: STÄUBLI FAVERGES, 74210 Faverges (FR)
(72) Inventeur: Lacroix, Jean-Jacques, 74330 Lovagny (FR); Pavan, André, Vercheres, 74210 Faverges (FR)
(74) Mandataire: Myon, Gérard Jean-Pierre

(56) Documents cités:
- FR-A- 1 039 178
- GB-A- 581 087

## Description

L'invention a trait à un coupe-circuit pour une installation de manutention de fluide sous pression tel qu'un gaz ou un liquide, notamment de l'eau, du fréon, une huile, etc...

Il est connu de réaliser un coupe-circuit comprenant deux éléments mâle et femelle aptes à s'emmancher axialement l'un dans l'autre en provoquant l'ouverture d'un clapet interne. Un tel clapet est généralement pourvu d'un joint torique destiné à assurer l'étanchéité entre le clapet et un corps d'étanchéité disposé autour du clapet en position fermée du clapet.

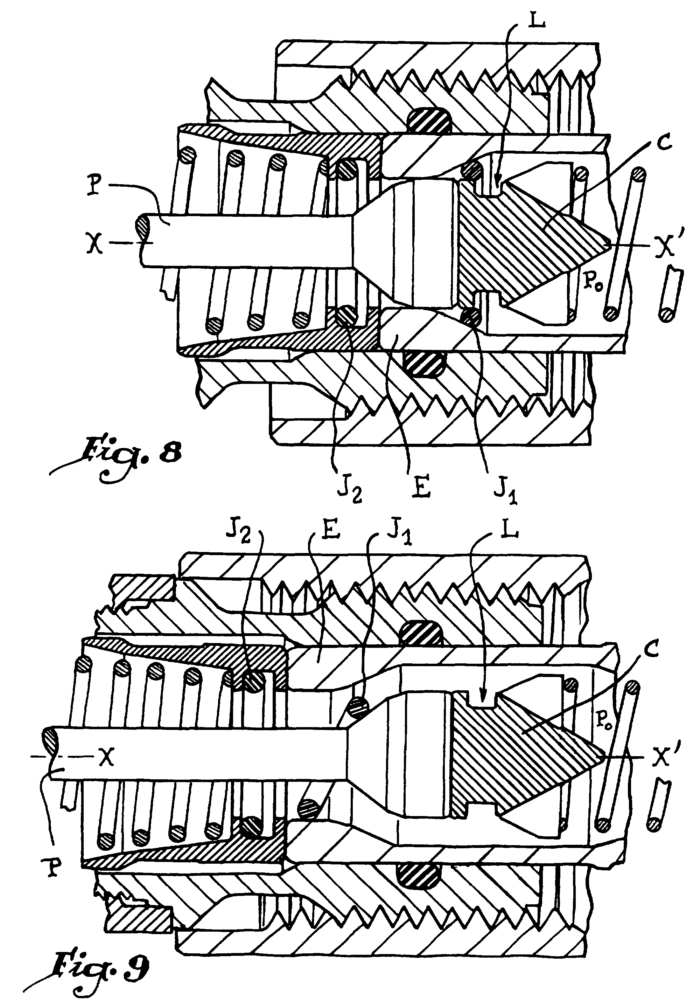

Un tel coupe-circuit est représenté aux figures 7 à 9 ci-annexées, ces figures correspondant à trois positions successives des éléments constitutifs du coupe-circuit lors de l'accouplement des éléments mâle et femelle. Des joints toriques J₁ et J₂ sont respectivement prévus, autour d'un clapet mobile C et d'un piston P de manoeuvre de ce clapet, pour venir en appui contre des surfaces d'étanchéité d'un embout E ou du piston P. Compte tenu de la pression P₀ régnant autour du clapet C dans la position des figures 7 et 8, le joint J₁ a tendance à être chassé du logement L ménagé à la périphérie du clapet C et à glisser jusqu'autour du piston P, comme représenté à la figure 9. Un déboîtement analogue peut avoir lieu lors d'une ouverture du coupe-circuit. Ce défaut de fonctionnement est inadmissible, puisque l'étanchéité entre le clapet et l'embout n'est alors plus assurée du fait de l'absence du joint J₁.

Lorsque le raccord mâle, situé sur la gauche des figures 7 à 9, est relié à une source de pression alors que le raccord femelle est relié à une installation de consommation du fluide, la différence de pression est inversée par rapport à celle représentée aux figures 7 à 9 et le risque de déboîtement concerne principalement le joint J₂.

Dans tous les cas, dès que la différence de pression entre les deux conduits reliés aux éléments mâle et femelle atteint une valeur critique, l'un des joints risque d'être éjecté. Cette valeur critique dépend du fluide, de la nature du joint et de la géométrie des éléments constitutifs du coupe-circuit. Elle peut être inférieure à 5 bars pour des coupe-circuits utilisés classiquement, de sorte que le danger d'éjection d'un joint se présente dans les conditions normales d'utilisation d'un coupe-circuit.

Il est par ailleurs connu de FR-A-1 039 178 ou de GB-A-581 087 de mettre en communication le logement d'un joint torique avec une partie aval d'un coupe-circuit. Ceci induit un risque de déboîtement du joint pendant les phases d'ouverture du clapet de ce genre de dispositif.

Pour pallier ces inconvénients, on pourrait prévoir de surmouler le joint dans un logement de type queue d'aronde, de sertir le joint ou d'exécuter un montage à l'aide de deux pièces qui emprisonnent le joint. Ces solutions sont coûteuses et nécessitent un montage plus complexe, ce qui augmente le temps de fabrication. Ces solutions rendent également délicates les opérations de maintenance à prévoir sur le coupe-circuit.

C'est à ces inconvénients qu'entend plus particulièrement remédier l'invention en proposant un coupe-circuit dans lequel les risques d'éjection d'un joint par rapport à son logement de réception sont très sensiblement diminués, voire supprimés.

Dans cet esprit, l'invention concerne un coupe-circuit pour installation de manutention de fluide sous pression selon la revendication 1.

De la même façon, l'invention concerne un coupe-circuit pour installation de manutention de fluide sous pression selon la revendication 2.

Grâce à l'invention, la pression régnant dans la zone de contre-pression peut exercer sur le joint un effort avec une composante centripète ou centrifuge tendant à le ramener vers l'intérieur de son logement de réception, ce qui permet d'équilibrer les éventuelles forces tendant à chasser le joint de son logement.

Selon un premier aspect avantageux de l'invention, lors d'une phase transitoire d'ouverture du clapet, un circuit d'écoulement préférentiel du fluide est ménagé entre ce logement et cette zone de contre-pression, à travers ce canal. Grâce à cet aspect de l'invention, la contre-pression régnant dans la zone de contre-pression a une valeur suffisante pour équilibrer la pression d'alimentation du coupe-circuit.

Selon un autre aspect avantageux de l'invention, le circuit d'écoulement préférentiel présente une géométrie telle que les pertes de charge qu'il induit, sur le fluide en cours d'écoulement et lors d'une phase transitoire d'ouverture du clapet, sont inférieures aux pertes de charge induites sur ce fluide, par un circuit d'écoulement principal du fluide défini entre le clapet - respectivement l'organe de manoeuvre - et un corps d'étanchéité. Cette répartition des pertes de charge garantit la création d'une contre-pression dans la zone de contre-pression antérieurement à la circulation du fluide vers la partie aval du coupe-circuit lors d'une ouverture du clapet, ce qui permet de créer la contre-pression avant que les efforts sur le joint n'aient tendance à le chasser de son logement. Dans ce cas, on peut prévoir que le circuit d'écoulement principal du fluide est pourvu d'obstacles aptes à augmenter les pertes de charges induites sur le fluide. Ces obstacles sont avantageusement formés par des gorges annulaires disposées sur au moins une des faces en regard de l'organe de manoeuvre, du clapet ou du corps d'étanchéité située en aval du joint.

Selon un autre aspect de l'invention, lors d'une phase transitoire d'ouverture du clapet, la section de passage du circuit d'écoulement préférentiel est plus grande que la section de passage correspondante d'un circuit d'écoulement principal du fluide défini entre le clapet - respectivement l'organe de manoeuvre - et un corps d'étanchéité. Selon une autre approche, l'on peut prévoir que dans les mêmes conditions, la longueur totale du circuit d'écoulement préférentiel est plus petite que la longueur correspondante du circuit d'écoulement principal.

Selon un autre aspect avantageux de l'invention, le logement est relié à la zone de contre-pression par plusieurs canaux de circulation de fluide répartis autour de l'axe de déplacement du clapet. Cette multiplicité des canaux permet une bonne répartition de la zone de contre-pression et de l'effort exercé sur le joint autour de cet axe.

Selon un autre aspect avantageux de l'invention, le logement est relié, par au moins un canal de circulation de fluide, à une zone de fluide sous pression formée en amont du joint. Ce second canal permet d'alimenter en fluide sous pression le volume intérieur du logement, puis le premier canal de circulation et la zone de contre-pression et ce, quel que soit le positionnement du joint à l'intérieur du logement. Dans ce cas, on peut également prévoir que le logement est relié à la zone de fluide sous pression par plusieurs canaux de circulation de fluide répartis autour de l'axe de déplacement du clapet.

L'invention sera mieux comprise et d'autres avantages de celle-ci apparaîtront plus clairement à la lumière de la description qui va suivre d'un mode de réalisation d'un coupe-circuit conforme à son principe, donnée uniquement à titre d'exemple et faite en référence aux dessins annexés dans lesquels :
- la figure 1 est une coupe axiale schématique des deux éléments d'un coupe-circuit conforme à l'invention avant l'accouplement ;
- la figure 2 est une coupe axiale partielle du coupe-circuit de figure 1 lors de l'accouplement dans une première position ;
- la figure 3 est une vue analogue à la figure 2 alors que le dispositif est dans une seconde position ;
- la figure 4 est une vue à plus grande échelle du détail IV à la figure 3 ;
- la figure 5 est une vue analogue à la figure 2 alors que le dispositif est dans une troisième position ;
- la figure 6 est une vue analogue à la figure 4 alors que le dispositif est connecté de façon différente et
- les figures 7 à 9 sont des coupes axiales schématiques, analogues à la figure 2, pour un coupe-circuit de l'art antérieur.

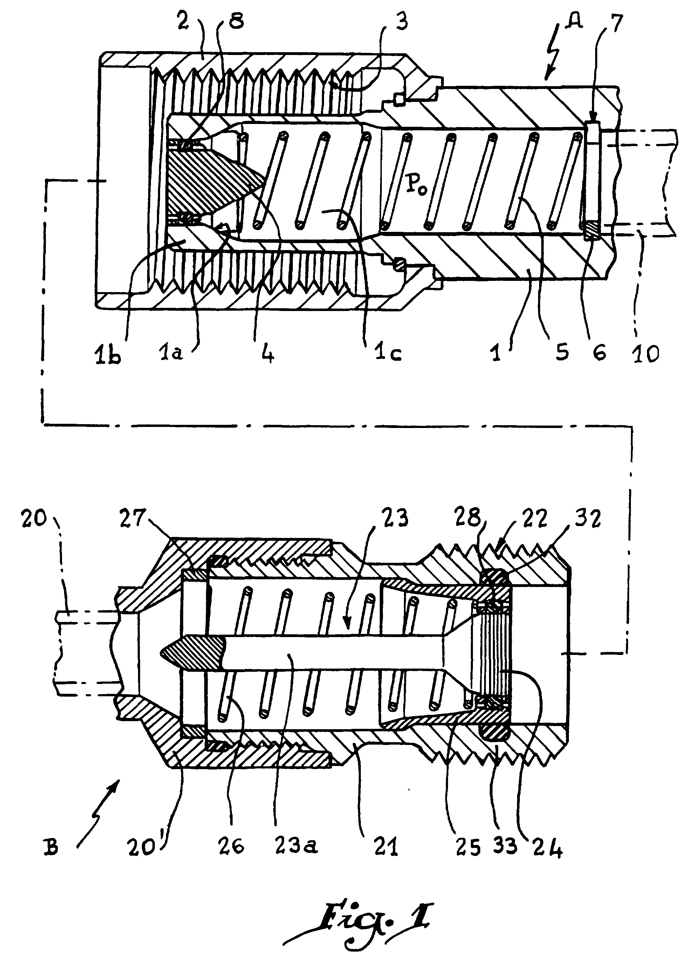

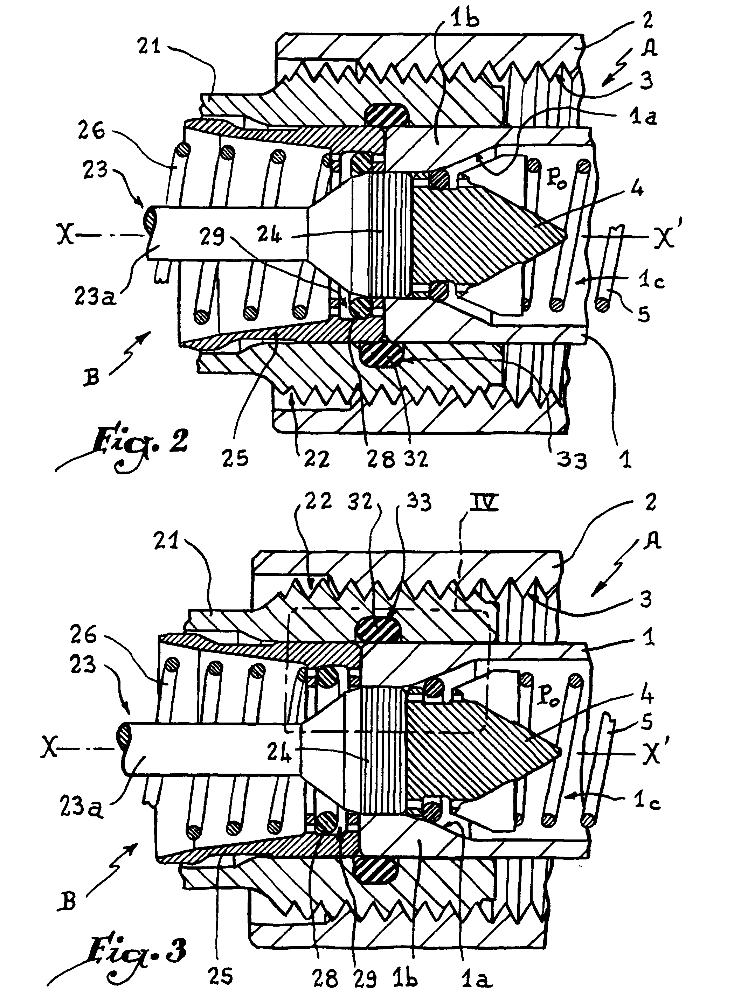

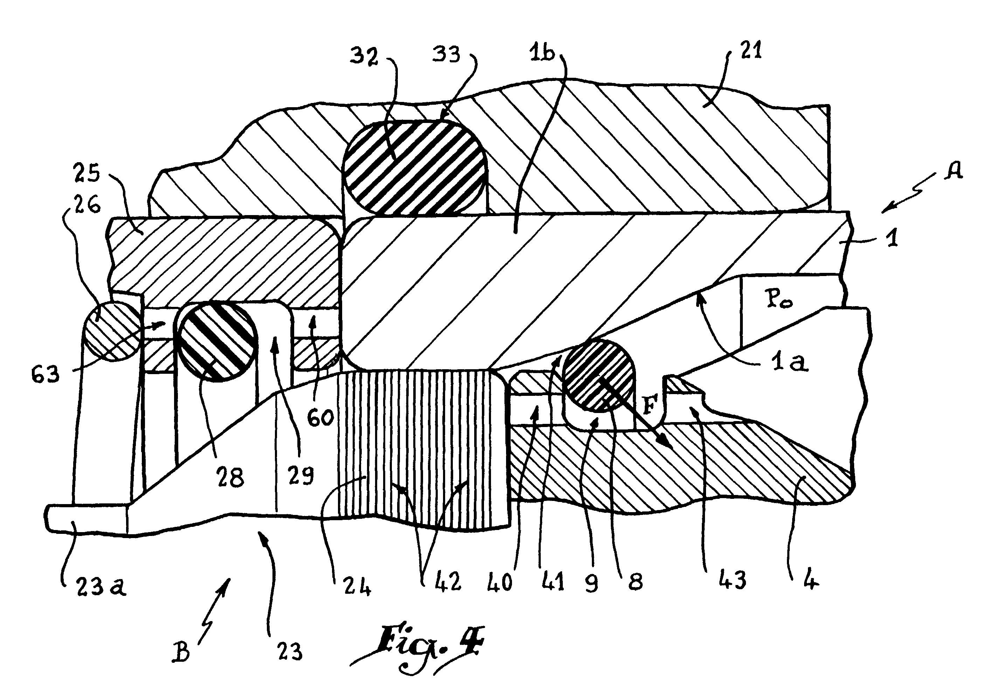

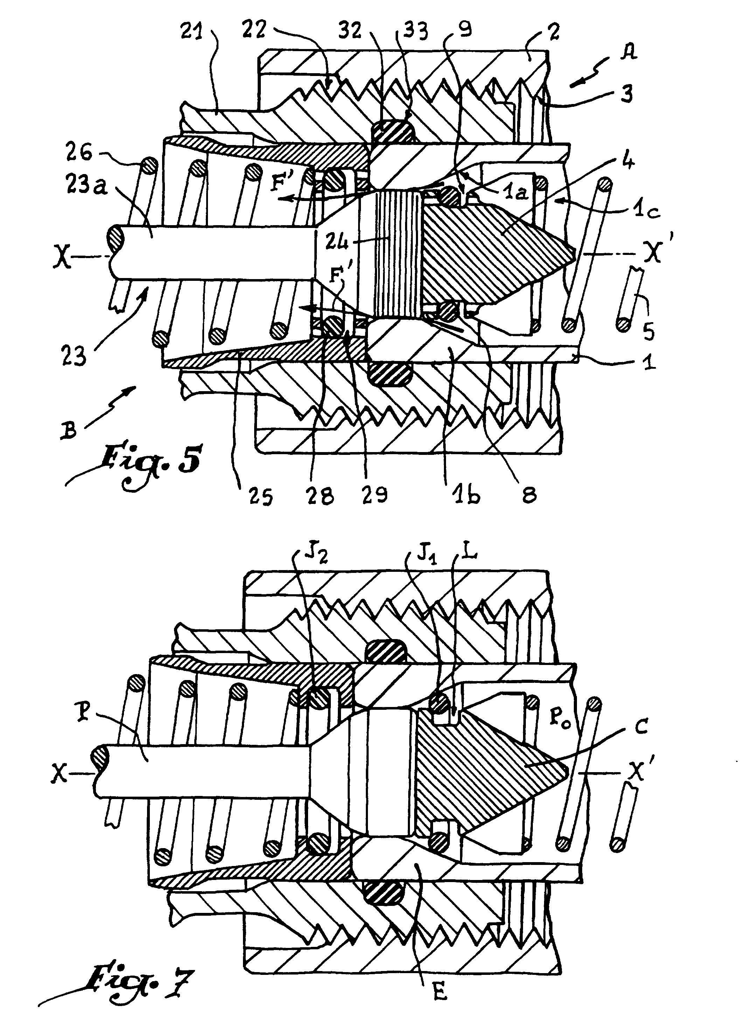

Le coupe-circuit pour installation hydraulique représenté aux figures 1 à 5 comprend un élément mâle A et un élément femelle B prévus l'un et l'autre sous forme tubulaire. L'élément mâle A est formé d'un embout 1 autour duquel est disposé un écrou 2 pourvu d'un filetage intérieur 3. L'embout 1 renferme un clapet 4 prévu pour venir en appui contre une surface convergente 1a de l'extrémité 1b de l'embout 1. Un ressort 5, en appui contre un circlips 6 fixé dans une gorge intérieure 7 de l'embout 1, exerce sur le clapet 4 un effort tendant à le plaquer sur la surface 1a.

Un joint d'étanchéité 8, torique ou substantiellement toroïdal, est disposé dans un logement périphérique 9 du clapet 4 pour venir en appui contre l'extrémité 1b de l'embout 1 en position de fermeture ou de verrouillage du coupe-circuit, telle que représentée à la figure 1.

Dans l'exemple représenté, un conduit 10 relié à l'embout 1 est connecté à une source sous pression de fluide tel que de l'eau, de sorte qu'une pression P₀ règne à l'intérieur de l'embout 1.

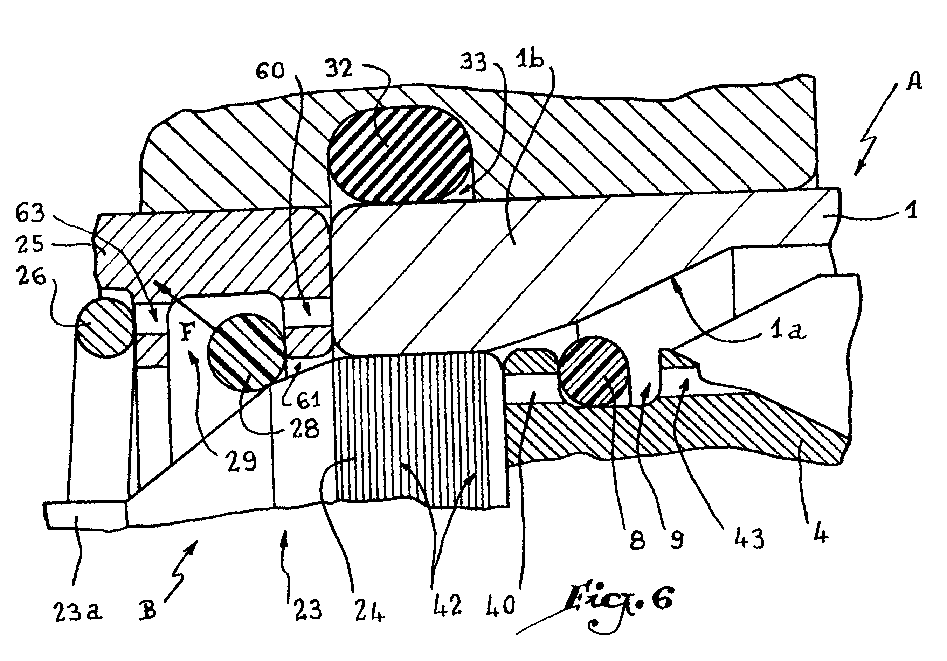

L'élément femelle B est, quant à lui, raccordé à un conduit 20 relié à un dispositif d'utilisation du fluide sous pression en provenance du conduit 10. L'élément femelle B comprend un manchon 21 pourvu d'un filetage extérieur 22 prévu pour coopérer avec le filetage intérieur 3 l'écrou 2. En d'autres termes, le vissage des éléments 2 et 21 ensemble a pour effet de faire pénétrer l'embout 1 à l'intérieur du manchon 21 selon la séquence représentée aux figures 2 à 5.

Le manchon 21 renferme un piston 23 dont la tête 24 présente une section transversale sensiblement identique à celle du clapet 4, de sorte qu'elle peut pénétrer à l'intérieur de l'extrémité 1b de l'embout.1, en poussant le clapet 4 à l'encontre de la force exercée par la pression P₀ et le ressort 5.

On note XX' l'axe de déplacement des éléments 4, 23 et 24 par rapport à l'embout 1.

Une contre-soupape 25 est disposée autour de la tête 24 du piston 23. Cette contre-soupape subit un effort de poussée en direction du débouché du manchon 21, cet effort étant dû à un ressort de rappel élastique 26 en appui contre une rondelle 27 immobilisée entre le manchon 21 et un raccord d'extrémité 20' du conduit 20 vissé sur le manchon 21.

Un joint d'étanchéité 28, torique ou globalement torique, est disposé dans un logement 29 ménagé dans la contre-soupape 25 de façon à venir en appui contre la surface radiale externe de la tête 24 du piston 23 dans la position de la figure 1.

Un joint torique d'étanchéité 32 est prévu, à proximité du débouché du manchon 21 dans un logement 33, de façon à venir en appui contre la surface radiale extérieure de l'embout 1 lorsque les éléments A et B sont accouplés.

Le vissage de l'écrou 2 sur le manchon 21 a pour effet de déplacer l'embout 1 à l'intérieur du manchon 21 en repoussant la contre-soupape 25, alors que le piston 23 peut être maintenu immobile par rapport à l'embout 21 auquel il est cinématiquement relié par une tige 23a solidaire de la rondelle 27. Ainsi, la tête 24 du piston 23 pénètre à l'intérieur de l'extrémité 1b de l'embout 1 au fur et à mesure que cet embout pénètre à l'intérieur du manchon 21.

Conformément à l'invention, le logement 9 est relié à l'aval du clapet 4, c'est-à-dire à la face avant de la tête 24 du piston 23, par au moins un canal 40, deux canaux étant représentés sur les figures. Chaque canal 40 relie le volume intérieur du logement 9 à une zone périphérique 41 définie entre la surface extérieure du clapet 4 et la surface intérieure 1a de l'embout 1, c'est-à-dire radialement autour du clapet 4. Compte tenu de ce qui précède, la pression régnant dans la zone 41 est égale, aux pertes de charge près, à la pression P₀ régnant à l'intérieur de l'embout 1.

Lorsque le piston 23 repousse le clapet 4 jusque dans la position des figures 3 et 4, la zone 41 s'étend jusqu'au voisinage du joint 8, de sorte que la pression P₀ s'exerce sur le joint 8 du côté aval de ce joint et produit un effort représenté par la flèche F à la figure 4.

L'équilibre des forces exercées sur le joint 8 par la pression P₀ régnant en amont et en aval de ce joint a pour effet de garantir sa stabilité. Il n'a pas tendance à être chassé ou déboîté à l'extérieur du logement 9.

Pour assurer que la pression P₀ ou une pression légèrement inférieure règne effectivement dans la zone 41 dans la position de la figure 4, un circuit préférentiel d'écoulement du fluide entre le logement 9 et la zone 41 est créé à travers les canaux 40, ce circuit préférentiel induisant des pertes de charge plus faibles sur le fluide que le circuit défini entre la surface radiale externe de la tête 24 du piston 23 et la surface radiale interne de l'extrémité 1b du manchon 1 dans les positions des figures 2 à 5, c'est-à-dire lors d'une phase transitoire d'ouverture du clapet 4. Pour ce faire, le jeu fonctionnel entre les pièces 24 et 1 est inférieur au jeu fonctionnel entre les pièces 4 et 1, de sorte que la section de passage du circuit ménagé entre le logement 9 et la zone 41 est plus importante que la section de passage du circuit ménagé entre les pièces 24 et 1.

En pratique, le circuit préférentiel est constitué grâce au jeu fonctionnel entre les pièces 4 et 24 d'une part, 4 et 1 d'autre part. Pour augmenter la section de passage apparente de ce circuit préférentiel, il peut être prévu des encoches radiales, non représentées, au droit des canaux 40 sur la face aval du clapet 4 ou sur la face avant de la tête 24, ces encoches favorisant la mise en communication des canaux 40 et de la zone 41.

Le circuit réalisé entre les canaux 40 et la zone 41 est également préférentiel en ce qu'il est plus court que le circuit réalisé entre les éléments 24 et 1. En effet, la surface de portée entre la tête 24 et l'extrémité 1b du manchon 1, telle qu'elle apparaît à la figure 4, est sensiblement plus grande que la surface de portée entre le clapet 4 et la tête 24, de sorte que, à jeu fonctionnel équivalent, le fluide aurait tendance à se diriger vers la zone 41 plutôt que vers le volume intérieur du manchon 21.

Pour augmenter encore le caractère préférentiel du circuit de fluide ménagé entre les canaux 40 et la zone 41, on peut prévoir que la surface périphérique externe de la tête 24 est pourvue de gorges annulaires 42 destinées à former des perturbations dans l'écoulement du fluide entre les éléments 24 et 1b, de façon à augmenter les pertes de charges.

Dans tous les cas, le caractère préférentiel du circuit d'écoulement du fluide entre les canaux 40 et la zone 41 a pour but d'assurer que la pression P₀, ou une pression sensiblement équivalente à cette pression, sert de contre-pression dans la zone 41 pour exercer sur le joint 8 un effort tendant à le ramener vers l'intérieur du logement 9.

En pratique, les canaux 40 du circuit préférentiel ne sont pas mis en pression tant que le joint 8 reste en place dans le logement 9, comme représenté à la figure 2. Ensuite, le déplacement du joint 8 vers l'extérieur du logement 9 a pour effet d'ouvrir l'entrée des canaux 40 qui sont alors mis en pression, cette mise en pression résultant dans une mise en pression correspondante de la zone 41, ce qui a pour effet de créer l'effort représenté par la flèche F et de rabattre le joint 8 vers l'intérieur du logement 9. En d'autres termes, c'est la déformation ou le déplacement du joint 8 vers l'extérieur du logement 9 qui génère l'effort de remise en place de ce joint.

Le logement 9 est par ailleurs relié au volume intérieur principal 1c de l'embout 1 grâce à plusieurs canaux 43 dont deux sont visibles sur les figures, ces canaux permettant une circulation du fluide en direction des canaux 40 indépendamment de la position du joint 8 à l'intérieur du logement 9.

Les canaux 43 sont avantageusement disposés en regard des canaux 40, de sorte que les canaux 40 et 43 peuvent être réalisés en une opération de perçage, parallèlement à l'axe XX'.

Avantageusement, les canaux 40 et 43 sont régulièrement répartis autour de l'axe XX' de telle sorte que la zone de contre-pression 41 est alimentée de façon symétrique autour de l'axe XX'. Ainsi, l'effort exercé sur le joint 8 grâce à la contre-pression régnant dans cette zone est également régulièrement réparti autour de cet axe.

En pratique, le nombre de canaux 40 et 43 est compris entre 3 et 64, de préférence entre 3 et 12. Bien entendu, pour un coupe circuit de diamètre important, le nombre de canaux 40 et 43 pourrait être plus important.

Grâce à l'invention, dans la position de la figure 5, le joint 8 a été rabattu vers l'intérieur du logement 9, alors que le fluide peut s'écouler en direction du volume intérieur du manchon 21, comme représenté par les flèches F'.

La suite du mouvement de vissage de l'écrou 2 sur le manchon 21 a pour effet de déplacer la tête 24 du piston 23 vers l'intérieur de l'embout 1, de telle sorte que compte tenu du caractère évasé de la surface 1a, le circuit d'écoulement du fluide entre les pièces 1 et 24 voit sa section augmenter au point que les pertes de charges exercées sur le fluide sont très sensiblement diminuées.

L'invention a été présentée avec l'élément mâle A relié à une source de pression. Elle est également transposable au cas où l'élément femelle B est relié à une source de pression alors que l'élément mâle A est relié à un dispositif ou à une installation de consommation du fluide comme représenté à la figure 6.

Pour éviter un déboîtement du joint 28 par rapport à son logement 29, des canaux 60 et 63 sont respectivement prévus en aval et en amont du joint 28, de façon à permettre l'alimentation d'une zone de contre-pression 61 formée radialement autour de la tête 24 du piston 23.

Sous l'effet de la pression P'₀ régnant dans le manchon 21, le joint 28 est déplacé vers une zone de moindre pression, c'est-à-dire en direction de la tête 24 du piston 23. La contre-pression régnant dans la zone 61 exerce sur le joint 28 un effort représenté par la flèche F à la figure 6, cet effort ayant tendance à repousser ce joint vers l'intérieur du logement 29.

Comme précédemment, les canaux 60 et 63 sont régulièrement répartis autour de l'axe XX'. Des obstacles peuvent être prévus sur la surface radiale externe du clapet 4 pour augmenter les pertes de charge lors des phases transitoires d'ouverture du clapet afin de créer un circuit d'écoulement préférentiel entre le logement 29 et la zone de contre-pression, à travers les canaux 60.

Quel que soit le mode de branchement du coupe-circuit, des gorges annulaires peuvent également être prévues sur la surface intérieure de l'extrémité 1b de l'élément 1. Dans tous les cas, d'autres types d'obstacles destinés à augmenter les pertes de charge peuvent être envisagés.

L'invention a été décrite en référence à un coupe-circuit pour une installation de fluide pas ou peu compressible. Elle demeure applicable pour d'autres types d'installations, notamment adaptées aux fluides compressibles tels que les gaz. L'invention peut également être mise en oeuvre avec des fluides diphasiques qui se présentent, en fonction des conditions d'emploi, sous forme liquide ou gazeuse, et notamment avec un fluide caloporteur tel que du fréon.

## Revendications

1. Coupe-circuit pour installation de manutention de fluide sous pression comprenant un clapet interne (4) au moins un joint (8) de forme substantiellement toroïdale étant disposé dans un logement (9) de réception autour dudit clapet, **caractérisé en ce que** ledit logement est relié, par au moins un canal (40) de circulation de fluide, à une zone (41) de contre-pression formée en aval dudit joint (8) autour dudit clapet (4), ladite zone (41) de contre-pression étant mise en pression, lors d'une phase transitoire d'ouverture dudit clapet, à travers ledit canal (40), dans le cas d'un déplacement dudit joint (8) vers l'extérieur dudit logement (9), la mise en pression (Pₒ), par le fluide au travers dudit canal (40), de la zone de contre pression exerçant un effort (F) qui rabat ledit joint vers l'intérieur dudit logement.

2. Coupe-circuit pour installation de manutention de fluide sous pression comprenant un clapet interne (4) et un organe (23, 24) de manoeuvre dudit clapet, au moins un joint (28) de forme substantiellement toroide étant disposé dans un logement (29) de réception autour dudit organe de manoeuvre (23, 24), **caractérisé en ce que** ledit logement est relié, par au moins un canal (60) de circulation de fluide, à une zone (61) de contre-pression formée en aval dudit joint (28) autour dudit organe de manoeuvre (23, 24), ladite zone (61) de contre-pression étant mise en pression, lors d'une phase transitoire d'ouverture dudit coupe-circuit autour dudit organe de manoeuvre, à travers ledit canal (60) dans le cas d'un déplacement dudit joint (28) vers l'extérieur dudit logement (29), la mise en pression (Pₒ), par le fluide au travers dudit canal (60), de la zone de contre pression exerçant un effort (F) qui rabat ledit joint vers l'intérieur dudit logement.

3. Coupe-circuit selon l'une des revendications 1 ou 2, **caractérisé en ce que**, lors d'une phase transitoire d'ouverture du clapet, un circuit d'écoulement préférentiel dudit fluide est ménagé entre ledit logement (9, 29) et ladite zone (41, 61) de contre-pression à travers ledit canal (40, 60).

4. Coupe-circuit selon la revendication 3, **caractérisé en ce que** ledit circuit d'écoulement préférentiel présente une géométrie telle que les pertes de charges qu'il induit, sur le fluide en cours d'écoulement et lors d'une phase transitoire d'ouverture dudit clapet (4), sont inférieures aux pertes de charges induites sur le fluide, par un circuit d'écoulement principal du fluide défini entre ledit clapet (4) - respectivement ledit organe de manoeuvre (23, 24) - et un corps d'étanchéité (1b).

5. Coupe-circuit selon la revendication 4, **caractérisé en ce que** ledit circuit d'écoulement principal du fluide est pourvu d'obstacles (42) aptes à augmenter les pertes de charges induites sur le fluide.

6. Coupe-circuit selon la revendication 5, **caractérisé en ce que** lesdits obstacles sont formés par des gorges annulaires disposées sur au moins une des faces en regard dudit organe de manoeuvre (24), dudit clapet (4) ou dudit corps d'étanchéité (1b) située en aval dudit joint.

7. Coupe-circuit selon l'une des revendications 3 à 6, **caractérisé en ce que**, lors d'une phase transitoire d'ouverture dudit clapet (4) la section de passage dudit circuit d'écoulement préférentiel est plus grande que la section de passage correspondante d'un circuit d'écoulement principal du fluide défini entre ledit clapet (4) - respectivement ledit organe de manoeuvre (23, 24) - et un corps d'étanchéité (1b).

8. Coupe-circuit selon l'une des revendications 3 à 7, **caractérisé en ce que** la longueur totale dudit circuit d'écoulement préférentiel est plus petite que la longueur correspondante d'un circuit d'écoulement principal du fluide défini entre ledit clapet (4) - respectivement ledit organe de manoeuvre (23, 24) - et un corps d'étanchéité (1b).

9. Coupe-circuit selon l'une des revendications précédentes, **caractérisé en ce que** ledit logement (9, 29) est relié à ladite zone de contre-pression (41, 61) par plusieurs canaux (40, 60) de circulation de fluide répartis autour d'un axe (XX') de déplacement dudit clapet (4).

10. Coupe-circuit selon l'une des revendications précédentes, **caractérisé en ce que** ledit logement (9, 29) est relié, par au moins un canal (43, 63) de circulation de fluide, à une zone (1c) de fluide sous pression formée en amont dudit joint (8, 28).

11. Coupe-circuit selon la revendication 10, **caractérisé en ce que** ledit logement (9, 29) est relié à ladite zone (1c) de fluide sous pression par plusieurs canaux (43, 63) de circulation de fluide répartis autour d'un axe (XX') de déplacement dudit clapet (4).

## Patentansprüche

1. Abschaltgerät für eine Anlage zur Handhabung von unter Druck stehenden Flüssigkeiten mit einem Innenventil (4), wobei mindestens eine Dichtung (8) mit im Wesentlichen torischer Form in einem Aufnahmeraum (9) um das Ventil herum angeordnet ist,
**dadurch gekennzeichnet,**
**dass** der Aufnahmeraum durch mindestens einen Zirkulationskanal (40) für Flüssigkeit mit einer Gegendruckzone (41) verbunden ist, die stromabwärts zur Dichtung (8) um das Ventil (4) herum ausgebildet ist, wobei die Gegendruckzone (41) bei einer Übergangsphase der Öffnung des Ventils über den Kanal (40) in dem Fall einer Verschiebung der Dichtung (8) aus dem Aufnahmeraum (9) heraus unter Druck gesetzt wird, wobei das Unterdrucksetzen (P₀) der Gegendruckzone durch die Flüssigkeit über den Kanal (40) eine Kraft (F) ausübt, die die Dichtung in das Innere des Aufnahmeraums zurückdrängt.

2. Abschaltgerät für eine Anlage zur Handhabung von unter Druck stehenden Flüssigkeiten mit einem Innenventil (4) und einem Betätigungsorgan (23, 24) des Ventils, wobei mindestens eine Dichtung (28) mit im Wesentlichen torischer Form in einem Aufnahmeraum (29) um das Betätigungsorgan (23, 24) herum angeordnet ist, **dadurch gekennzeichnet, dass** der Aufnahmeraum durch mindestens einen Zirkulationskanal (60) für Flüssigkeit mit einer Gegendruckzone (61) verbunden ist, die stromabwärts zur Dichtung (28) um das Betätigungsorgan (23, 24) herum ausgebildet ist, wobei die Gegendruckzone (61) bei einer Übergangsphase der Öffnung des Abschaltgerätes um das Betätigungsorgan herum über den Kanal (60) in dem Fall einer Verschiebung der Dichtung (28) aus dem Aufnahmeraum (29) heraus unter Druck gesetzt wird, wobei das Unterdrucksetzen (P₀) der Gegendruckzone durch die Flüssigkeit über den Kanal (60) eine Kraft (F) ausübt, die die Dichtung in das Innere des Aufnahmeraums zurückdrängt.

3. Abschaltgerät nach einem der Ansprüche 1 oder 2, **dadurch gekennzeichnet, dass** bei einer Übergangsphase der Öffnung des Ventils ein bevorzugter Strömungskreis der Flüssigkeit zwischen dem Aufnahmeraum (9, 29) und der Gegendruckzone (41, 61) über den Kanal (40, 60) vorgesehen ist.

4. Abschaltgerät nach Anspruch 3, **dadurch gekennzeichnet, dass** der bevorzugte Stromkreis eine solche Geometrie aufweist, dass die Druckverluste, die er auf die Flüssigkeit während des Fließens und bei der Übergangsphase des Öffnens des Ventils (4) bewirkt, geringer sind als die Druckverluste, die der Flüssigkeit durch einen Hauptströmungskreis der Flüssigkeit mitgeteilt werden, der zwischen dem Ventil (4) - beziehungsweise dem Betätigungsorgan (23, 24) - und einem Dichtungskörper (16) definiert ist.

5. Abschaltgerät nach Anspruch 4, **dadurch gekennzeichnet, dass** der Hauptströmungskreis der Flüssigkeit mit Hindernissen (42) versehen ist, die geeignet sind, die der Flüssigkeit mitgeteilten Druckverluste zu erhöhen.

6. Abschaltgerät nach Anspruch 5, **dadurch gekennzeichnet, dass** die Hindernisse durch Ringnuten gebildet sind, die an mindestens einer der Flächen gegenüberstehend zum Betätigungsorgan (24), zum Ventil (4) oder zum Dichtungskörper (1b) angeordnet sind, die stromabwärts zur Dichtung gelegen ist.

7. Abschaltgerät nach einem der Ansprüche 3 bis 6, **dadurch gekennzeichnet, dass** bei einer Übergangsphase der Öffnung des Ventils (4) der Durchflussquerschnitt des bevorzugten Strömungskreises größer ist als der korrespondierende Durchflussquerschnitt eines Hauptströmungskreises der Flüssigkeit, der zwischen dem Ventil (4) - beziehungsweise dem Betätigungsorgan (23, 24) - und einem Dichtungskörper (1b) definiert ist.

8. Abschaltgerät nach einem der Ansprüche 3 bis 7, **dadurch gekennzeichnet, dass** die Gesamtlänge des bevorzugten Strömungskreises kleiner ist als die korrespondierende Länge eines Hauptströmungskreises der Flüssigkeit, der zwischen dem Ventil (4) - beziehungsweise dem Betätigungsorgan (23, 24) - und einem Dichtungskörper (1b) definiert ist.

9. Abschaltgerät nach einem der vorhergehenden Ansprüche, **dadurch gekennzeichnet, dass** der Aufnahmeraum (9, 29) mit der Gegendruckzone (41, 61) durch mehrere Zirkulationskanäle (40, 60) für Flüssigkeit verbunden ist, die um eine Verschiebungsachse (XX') des Ventils (4) herum verteilt sind.

10. Abschaltgerät nach einen der vorhergehenden Ansprüche, **dadurch gekennzeichnet, dass** der Aufnahmeraum (9, 29) durch mindestens einen Flüssigkeitskanal (13, 63) mit mindestens einer unter Druck stehenden Flüssigkeitszone (1c) verbunden ist, die stromaufwärts zur Dichtung (8, 28) gebildet ist.

11. Abschaltgerät nach Anspruch 10, **dadurch gekennzeichnet, dass** der Aufnahmeraum (9, 29) mit der unter Druck stehenden Flüssigkeitszone (1c) durch mehrere Flüssigkeitskanäle (43, 63) verbunden ist, die um die Verschiebungsachse (XX') des Ventils (4) herum verteilt sind.

## Claims

1. Circuit breaker for an installation for handling fluid under pressure, comprising an internal valve (4), at least one seal (8) which is substantially toroidal in shape being disposed in an accommodating housing (9) around said valve, **characterised in that** said housing is connected, by at least one fluid circulating channel (40), to a counter-pressure zone (41) formed downstream of said O-ring (8) around said valve (4), said counter-pressure zone (41) being pressurised, during a transitory open phase of said valve, through said channel (40), in the event of a displacement of said O-ring (8) towards the outside of said housing (9), the pressurisation (Pₒ), by the fluid through said channel (40), of the counter-pressure zone exerting a force (F) which urges said O-ring towards the inside of said housing.

2. Circuit breaker for an installation for handling fluid under pressure, comprising an internal valve (4) and a control device (23, 24) for said valve, at least one ring (28) which is substantially toroidal in shape being disposed in an accommodating housing (29) around said control device (23, 24), **characterised in that** said housing is connected, by at least one fluid circulating channel (60), to a counter-pressure zone (61) formed downstream of said O-ring (28) around said control device (23, 24), said counter-pressure zone (61) being pressurised, during a transitory open phase of said circuit breaker around said control device, through said channel (60) in the event of a displacement of said O-ring (28) towards the outside of said housing (29), the pressurisation (Pₒ), by the fluid through said channel (60), of the counter-pressure zone exerting a force (F) which urges said O-ring towards the inside of said housing.

3. Circuit breaker according to one of claims 1 or 2, **characterised in that**, during a transitory open phase of the valve, a preferential flow circuit of said fluid is provided between said housing (9, 29) and said counter-pressure zone (41, 61) through said channel (40, 60).

4. Circuit breaker according to claim 3, **characterised in that** said preferential flow circuit has a geometry such that the pressure losses which it induces, on the fluid in the process of flowing and during a transitory open phase of said valve (4), are lower than the pressure losses induced on the fluid by a main flow circuit of the fluid defined between said valve (4) - or respectively said control device (23, 24) - and a sealing body (1b).

5. Circuit breaker according to claim 4, **characterised in that** said main flow circuit of the fluid is provided with obstacles (42) capable of increasing the pressure losses induced on the fluid.

6. Circuit breaker according to claim 5, **characterised in that** said obstacles are formed by annular grooves disposed on at least one of the faces opposite said control device (24), said valve (4) or said sealing body (1b), which face is situated downstream of said O-ring.

7. Circuit breaker according to one of claims 3 to 6, **characterised in that**, during a transitory open phase of said valve (4), the flow section of said preferential flow circuit is larger than the corresponding flow section of a main flow circuit of the fluid defined between said valve (4) - or respectively said control device (23, 24) - and a sealing body (1b).

8. Circuit breaker according to one of claims 3 to 7, **characterised in that** the total length of said preferential flow circuit is smaller than the corresponding length of a main flow circuit of the fluid defined between said valve (4) - or respectively said control device (23, 24) - and a sealing body (1b).

9. Circuit breaker according to one of the preceding claims, **characterised in that** said housing (9, 29) is connected to said counter-pressure zone (41, 61) by a plurality of fluid circulating channels (40, 60) distributed around an axis (XX') of displacement of said valve (4).

10. Circuit breaker according to one of the preceding claims, **characterised in that** said housing (9, 29) is connected, by at least one fluid circulating channel (43, 63), to a zone of fluid under pressure formed upstream of said O-ring (8, 28).

11. Circuit breaker according to claim 10, **characterised in that** said housing (9, 29) is connected to said zone (1c) of fluid under pressure by a plurality of fluid circulating channels (43, 63), distributed around an axis (XX') of displacement of said valve (4).
